# EUROPEAN PATENT APPLICATION

(11) **EP 4 620 831 A1**
(43) Date of publication of application: **24.09.2025**
(21) Application number: 24747300.2
(22) Date of filing: 23.01.2024
(51) Int. Cl.: B64D 45/04, B64C 13/18, B64C 29/00, B64U 10/20, B64U 70/80, G05D 1/46, G08G 5/02

(54) **POSITION CONTROL SYSTEM FOR VERTICAL TAKEOFF AND LANDING AIRCRAFT, VERTICAL TAKEOFF AND LANDING AIRCRAFT, AND POSITION CONTROL METHOD FOR VERTICAL TAKEOFF AND LANDING AIRCRAFT**

(30) Priority: 23.01.2023 JP 2023008332
(71) Applicant: Mitsubishi Heavy Industries, Ltd., Tokyo 100-8332 (JP)
(72) Inventor: YAMAMOTO, Hiroki, Tokyo 100-8332 (JP)
(74) Representative: Hoffmann Eitle
(86) International application number: PCT/JP2024/001849
(87) International publication number: WO 2024/157973

(57) **Abstract**

Provided are a position control system for a vertical takeoff and landing aircraft, a vertical takeoff and landing aircraft, and a position control method for a vertical takeoff and landing aircraft, the vertical takeoff and landing aircraft comprising: a relative velocity acquiring unit for acquiring a relative velocity on the basis of a relative position between the vertical takeoff and landing aircraft and a landing target point; a relative-altitude acquisition unit for acquiring a relative altitude on the basis of the relative position between the vertical takeoff and landing aircraft and the landing target point; and a contact determining unit for determining contact between the vertical takeoff and landing aircraft and the landing target point on the basis of the relative velocity and the relative altitude.

## Description

### Technical Field

The present disclosure relates to a position control system for a vertical takeoff and landing aircraft, a vertical takeoff and landing aircraft, and a position control method for a vertical takeoff and landing aircraft.

### Background Art

In the related art, a technique for guiding a vertical takeoff and landing aircraft to a target point is known. As such a technique, for example, there is one disclosed in PTL 1. In the position control system of the vertical takeoff and landing aircraft of PTL 1, a swaying amount of a landing target point is estimated based on a relative position between the vertical takeoff and landing aircraft and a landing target point, and a target relative position and a target relative speed between the vertical takeoff and landing aircraft and the landing target point are calculated based on the swaying amount.

### Citation List

### Patent Literature

[PTL 1] Japanese Unexamined Patent Application Publication No. 2022-78702

### Summary of Invention

### Technical Problem

In a position control system of a vertical takeoff and landing aircraft in the related art, a swaying amount is estimated based on a relative position in a horizontal direction between the vertical takeoff and landing aircraft and a landing target point, and a target relative position and a target relative speed are calculated based on the swaying amount. When the vertical takeoff and landing aircraft lands on a target point, a relative altitude between the vertical takeoff and landing aircraft and the target point fluctuates due to the swaying of the ship or the like. Therefore, it is necessary to consider the contact between the vertical takeoff and landing aircraft and the target point.

The present disclosure is made to solve the above-described problems, and an object of the present disclosure is to provide a position control system and a method for a vertical takeoff and landing aircraft, in which even when a relative altitude between the vertical takeoff and landing aircraft and a landing target point fluctuates, the vertical takeoff and landing aircraft can be caused to suitably track the landing target point.

### Solution to Problem

A position control system for a vertical takeoff and landing aircraft according to the present disclosure for achieving the above object includes a relative speed acquisition unit that acquires a relative speed based on a relative position between a vertical takeoff and landing aircraft and a landing target point; a relative altitude acquisition unit that acquires a relative altitude based on the relative position between the vertical takeoff and landing aircraft and the landing target point; and a contact determination unit that determines whether contact occurs between the vertical takeoff and landing aircraft and the landing target point based on the relative speed and the relative altitude.

In addition, the vertical takeoff and landing aircraft of the present disclosure includes a position control system for a vertical takeoff and landing aircraft.

In addition, a position control method for a vertical takeoff and landing aircraft of the present disclosure includes a step of acquiring a relative speed based on a relative position between a vertical takeoff and landing aircraft and a landing target point; a step of acquiring a relative altitude based on the relative position between the vertical takeoff and landing aircraft and the landing target point; and a step of determining whether contact occurs between the vertical takeoff and landing aircraft and the landing target point based on the relative speed and the relative altitude.

### Advantageous Effects of Invention

According to the position control system for a vertical takeoff and landing aircraft, the vertical takeoff and landing aircraft, and the position control method for a vertical takeoff and landing aircraft of the present disclosure, even when the relative altitude between the vertical takeoff and landing aircraft and the landing target point fluctuates, the vertical takeoff and landing aircraft can suitably track the landing target point.

### Brief Description of Drawings

Fig. 1 is a schematic configuration diagram showing an example of a position control system for a vertical takeoff and landing aircraft according to the present embodiment.
Fig. 2 is an explanatory view showing a state where the vertical takeoff and landing aircraft according to the present embodiment is heading to a landing target point.
Fig. 3 is an explanatory view showing an example of a marker provided at the landing target point.
Fig. 4 is a flowchart showing an example of a processing procedure of a landing control method for the vertical takeoff and landing aircraft according to the present embodiment.
Fig. 5 is an explanatory view showing a landing operation of the vertical takeoff and landing aircraft according to the present embodiment.
Fig. 6 is a block diagram of an example of horizontal position control causing the vertical takeoff and landing aircraft to track a swaying landing target point.
Fig. 7 is a block diagram of an example of vertical position control causing the vertical takeoff and landing aircraft to track the swaying landing target point.
Fig. 8 is an explanatory diagram for describing a contact determination between the vertical takeoff and landing aircraft and the landing target point.
Fig. 9 is an explanatory diagram for describing a method for setting a collision avoidance region.
Fig. 10 is a block diagram showing an example of swaying amount estimation processing and target information generation processing.
Fig. 11 is a graph representing a relationship between a target altitude, a landing target point, and a relative altitude at the time of landing of the vertical takeoff and landing aircraft.

### Description of Embodiments

Hereinafter, a preferred embodiment of the present disclosure will be described in detail with reference to the drawings. The present disclosure is not limited to the embodiment. In addition, in a case where there are a plurality of embodiments, the present disclosure also includes configurations obtained by combining each embodiment. In addition, constituents in the embodiment include constituents that are easily perceivable by those skilled in the art, constituents that are substantially the same, and constituents within a so-called range of equivalents.

### [Embodiment]

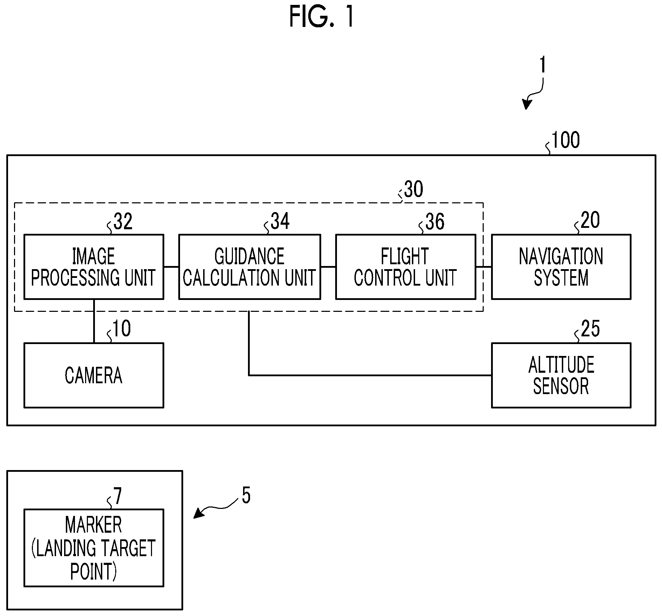

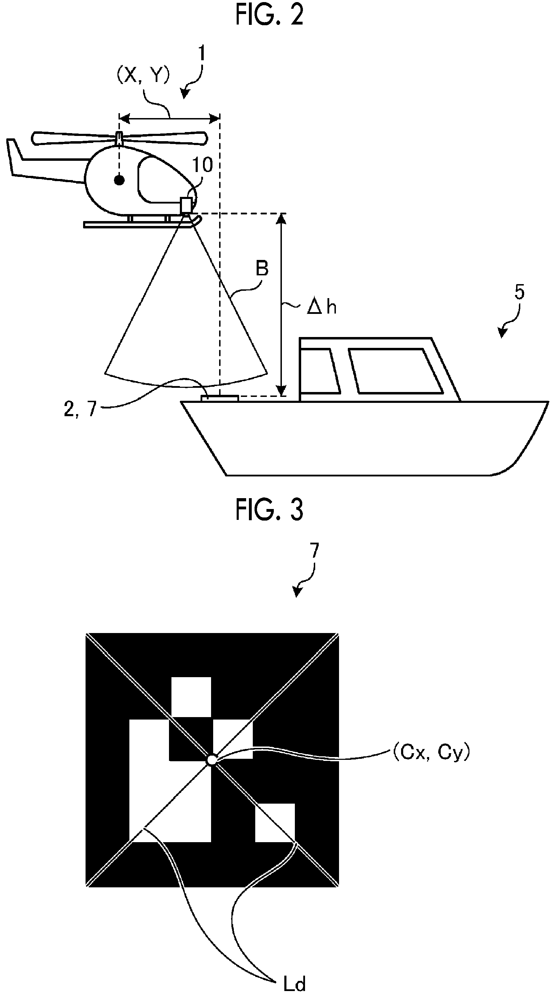

Fig. 1 is a schematic configuration diagram showing an example of a position control system for a vertical takeoff and landing aircraft according to the present embodiment, and Fig. 2 is an explanatory view showing a state where the vertical takeoff and landing aircraft according to the present embodiment is heading to a landing target point.

As shown in Fig. 1, a vertical takeoff and landing aircraft 1 of the present embodiment is a flying object (for example, a helicopter, a drone, or the like) as a rotary-wing aircraft. In the present embodiment, the vertical takeoff and landing aircraft 1 is an unmanned aircraft. The vertical takeoff and landing aircraft 1 may be any flying object capable of moving forward, backward, sideways, turning, and hovering, and may be a manned aircraft. The vertical takeoff and landing aircraft 1 is equipped with a position control system 100, and the flight is controlled by the position control system 100 to land at a landing target point 2 shown in Fig. 2.

### (Landing Target Point)

As shown in Fig. 2, the landing target point 2 is provided on a ship 5. For this reason, the vertical takeoff and landing aircraft 1 lands on the ship 5 as a moving object moving on the water. Although not shown, the ship 5 is provided with a restraining device for restraining the vertical takeoff and landing aircraft 1 when the vertical takeoff and landing aircraft 1 is landed on the landing target point 2. However, the landing target point 2 is not limited to the ship 5, and may be provided in a vehicle or the like as a moving object moving on the ground, or may be provided in a stationary facility or on the ground.

The landing target point 2 is provided with a marker 7 for the vertical takeoff and landing aircraft 1 to capture a position of the landing target point 2. Fig. 3 is an explanatory view showing an example of a marker provided at the landing target point. As shown in Fig. 3, the marker 7 is, for example, an AR marker color-coded in two colors of black and white, and is a square-shaped marker. The marker 7 is not limited to the AR marker, and may be any marker that can capture the position of the landing target point 2 by image processing, and may be, for example, an H mark or an R mark indicating a landing point of a heliport. In addition, a plurality of markers 7 having different shapes may be provided on the ship 5, and the vertical takeoff and landing aircraft 1 may be guided to the landing target point 2 corresponding to any one of the different markers 7. In addition, in the present embodiment, the marker 7 is provided on the ship 5 in order to capture the position of the landing target point 2. However, the configuration is not particularly limited as long as the position of the landing target point 2 can be acquired.

### (Position Control System)

As shown in Fig. 1, a position control system 100 for a vertical takeoff and landing aircraft 1 is a system that controls the position of the vertical takeoff and landing aircraft 1 in order to land the vertical takeoff and landing aircraft 1 in flight on a landing target point 2. The position control system 100 is mounted on the vertical takeoff and landing aircraft 1. The position control system 100 includes a camera 10, a navigation system 20, and a control unit 30. The position control system 100 is a control device, and the control device is a controller. It is realized, for example, by executing various programs stored in the storage unit in a RAM as a work region by a central processing unit (CPU), a micro processing unit (MPU), or the like.

The camera 10 is an imaging device mounted on the vertical takeoff and landing aircraft 1 via a gimbal (not shown). The camera 10 may be a monocular camera, a stereo camera, an infrared camera, or the like, as long as the camera 10 can capture the marker 7. The camera 10 is provided to capture the marker 7 provided at the landing target point 2 from the vertical takeoff and landing aircraft 1. The camera 10 can adjust an imaging direction via a gimbal (not shown). In the present embodiment, the control unit 30 controls the camera 10 such that an imaging range B (refer to Fig. 2) of the camera 10 faces directly below in a vertical direction as an example. The control unit 30 may control the camera 10 such that the imaging range B faces an oblique front side with respect to the vertical direction. In addition, the camera 10 may also be provided without a gimbal and may be fixed directly below the airframe of the vertical takeoff and landing aircraft 1 so that the imaging direction faces the lower side in the vertical direction.

The navigation system 20 is, for example, an inertial navigation system. In the present embodiment, the navigation system 20 is described as being applied to the inertial navigation system, but is not particularly limited, and any navigation system 20 may be used. In addition, the navigation system 20 may be an inertial navigation system including a global positioning system (GPS) in order to improve the measurement accuracy of the position. In the present embodiment, the inertial navigation system including the GPS is applied and described. However, the present disclosure is not particularly limited to the GPS, and any position measurement unit capable of accurately measuring a position may be used. For example, a quasi-zenith satellite system may be used, and a configuration in which the position measurement unit such as the GPS is omitted may be used as long as the position can be accurately measured only by the navigation system 20.

The navigation system 20 including the GPS acquires attitude angles of the vertical takeoff and landing aircraft 1 in a roll direction, a yaw direction, and a pitch direction, an airframe speed, an inertial speed, an airframe acceleration, an aircraft heading, position coordinates in an earth coordinate system, and the like of the vertical takeoff and landing aircraft 1. The navigation system 20 may have an attitude angle sensor that detects the attitude angle of the vertical takeoff and landing aircraft 1, a speed sensor that detects an airframe speed of the vertical takeoff and landing aircraft 1, an acceleration sensor that detects the airframe acceleration of the vertical takeoff and landing aircraft 1, and a sensor that detects an aircraft heading of the vertical takeoff and landing aircraft 1. The navigation system 20 outputs the acquired attitude angle, the airframe speed, the inertial speed, the airframe acceleration, the aircraft heading, and the position coordinates of the vertical takeoff and landing aircraft 1 to the control unit 30. In this way, the navigation system 20 functions as an acceleration acquisition unit that acquires the acceleration of the vertical takeoff and landing aircraft 1, an attitude acquisition unit that acquires the attitude of the vertical takeoff and landing aircraft 1, and an inertial speed acquisition unit that acquires the inertial speed of the vertical takeoff and landing aircraft 1.

In addition, the position control system 100 includes an altitude sensor 25 that detects an altitude of the vertical takeoff and landing aircraft 1 from a ground surface or a water surface. The altitude sensor 25 is, for example, a laser altimeter, and measures a relative altitude Δh (refer to Fig. 2) from the vertical takeoff and landing aircraft 1 to the landing target point 2. As the altitude sensor 25, a radio altimeter, a barometric altimeter, or any altimeter may be used. In addition, the altimeters may be appropriately combined and applied to measure an altitude from a ground surface or an altitude from a sea surface according to a use environment. The altitude sensor 25 outputs the detected relative altitude Δh of the vertical takeoff and landing aircraft 1 to the control unit 30. The altitude sensor 25 measures the altitude of the vertical takeoff and landing aircraft 1 and outputs the altitude to the control unit 30, and the control unit 30 may calculate the relative altitude Δh to the landing target point 2 based on the altitude of the vertical takeoff and landing aircraft 1 in a guidance calculation unit 34 (to be described later). In addition, the position control system 100 may not be limited to the altitude sensor 25, and may calculate the relative altitude Δh between the vertical takeoff and landing aircraft 1 and the ship 5 by performing image processing on an image including the marker 7 captured by the camera 10 in an image processing unit 32 which will be described later.

### (Control Unit)

The control unit 30 includes an image processing unit 32, a guidance calculation unit 34, and a flight control unit 36. The control unit 30 includes an imaging control unit (not shown) that controls the imaging direction of the camera 10 via a gimbal (not shown) provided in the vertical takeoff and landing aircraft 1. In the present embodiment, as described above, the imaging range B of the camera 10 is adjusted to face directly below in the vertical direction. The position control system for a vertical takeoff and landing aircraft of the present disclosure is intended to control the vertical takeoff and landing aircraft 1 in the vertical direction, and in this control, the camera 10 and the image processing unit 32 are not required.

### (Image Processing Unit)

The image processing unit 32 performs image processing on the image captured by the camera 10 to calculate the center (Cx, Cy) (refer to Fig. 3) of the marker 7, that is, the landing target point 2. The center (Cx, Cy) here is a coordinate point in a camera fixed coordinate system in which the center of the image captured by the camera 10 is the origin, and can be calculated by the number of pixels from the center of the image. Specifically, as shown in Fig. 3, the image processing unit 32 specifies two diagonal lines Ld extending between corner portions of the marker 7 through image processing, and sets an intersection of the two specified diagonal lines Ld as the center (Cx, Cy) of the marker 7. The landing target point 2 is not limited to the center (Cx, Cy) of the marker 7, and may be any of the four corners of the marker 7 or a position offset from the center of the marker 7. The image processing unit 32 outputs the calculated center (Cx, Cy) of the marker 7 to the guidance calculation unit 34. The image processing unit 32 may calculate the center (Cx, Cy, Cz) of the landing target point 2 and output the center to the guidance calculation unit 34.

In addition, the image processing unit 32 may specify a direction of the marker 7 by performing image processing on the image including the marker 7 captured by the camera 10, and may calculate the ship heading of the ship 5 by associating the direction of the marker 7 with the aircraft heading of the vertical takeoff and landing aircraft 1 acquired by the navigation system 20. Further, as described above, the image processing unit 32 may calculate the relative altitude Δh between the vertical takeoff and landing aircraft 1 and the ship 5 by performing image processing on the image including the marker 7 captured by the camera 10.

### (Guidance Calculation Unit)

As shown in Fig. 1, the guidance calculation unit 34 calculates a control amount of the vertical takeoff and landing aircraft 1 for guiding the vertical takeoff and landing aircraft 1 to the landing target point 2. The control amount is a control amount for adjusting the airframe speed, the attitude angle, a rate of the attitude angle, and the like of the vertical takeoff and landing aircraft 1. The guidance calculation unit 34 calculates the relative coordinate position between the vertical takeoff and landing aircraft 1 and the landing target point 2 in order to calculate the control amount. Specifically, the guidance calculation unit 34 calculates, as the relative coordinate position, the relative position (X, Y) between the vertical takeoff and landing aircraft 1 and the landing target point 2 and the relative altitude Δh between the vertical takeoff and landing aircraft 1 and the landing target point 2. In addition, the guidance calculation unit 34 calculates the relative speed between the vertical takeoff and landing aircraft 1 and the landing target point 2. The relative position (X, Y) is a distance between the vertical takeoff and landing aircraft 1 and the landing target point 2 in the horizontal direction. The relative altitude Δh is a distance between the vertical takeoff and landing aircraft 1 and the landing target point 2 in the vertical direction.

The guidance calculation unit 34 calculates the relative position (X, Y) between the vertical takeoff and landing aircraft 1 and the landing target point 2 based on the center (Cx, Cy) of the marker 7 calculated by the image processing unit 32, the heading of the camera 10, that is, the aircraft heading of the vertical takeoff and landing aircraft 1, and the altitude of the vertical takeoff and landing aircraft 1 (the relative altitude Δh with respect to the landing target point 2). In the present embodiment, the heading of the camera 10 is made to coincide with the aircraft heading of the vertical takeoff and landing aircraft 1. However, the present disclosure is not particularly limited thereto, and the heading of the camera 10 may not coincide with the aircraft heading of the vertical takeoff and landing aircraft 1. In this way, the image processing unit 32 and the guidance calculation unit 34 acquire the relative position between the vertical takeoff and landing aircraft 1 and the landing target point 2.

In addition, the guidance calculation unit 34 calculates the relative altitude Δh to the landing target point 2, based on the altitude of the vertical takeoff and landing aircraft 1 detected by the altitude sensor 25. Therefore, the altitude sensor 25 and the guidance calculation unit 34 acquire the relative altitude Δh between the vertical takeoff and landing aircraft 1 and the landing target point 2. In the image processing unit 32, the relative altitude Δh between the vertical takeoff and landing aircraft 1 and the ship 5 may be calculated by performing image processing on the image including the marker 7 captured by the camera 10.

In addition, the guidance calculation unit 34 calculates the relative speed between the vertical takeoff and landing aircraft 1 and the landing target point 2. Therefore, the guidance calculation unit 34 acquires the relative speed between the vertical takeoff and landing aircraft 1 and the landing target point 2. More specifically, the guidance calculation unit 34 executes relative speed estimation processing of calculating a relative speed (ΔVx, ΔVy) between the vertical takeoff and landing aircraft 1 and the landing target point 2 based on the relative position (X, Y) and the airframe speed (Vx, Vy). In addition, the estimation processing of calculating a relative vertical speed (ΔVz) based on the altitude of the vertical takeoff and landing aircraft 1 detected by the altitude sensor 25 is executed. Therefore, the guidance calculation unit 34 acquires the relative speed (ΔVx, ΔVy, ΔVz) between the vertical takeoff and landing aircraft 1 and the landing target point 2.

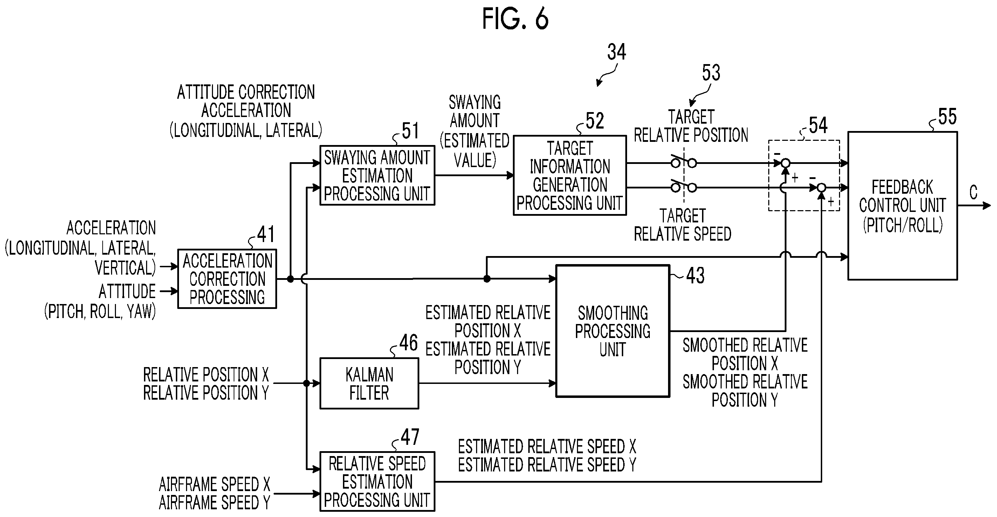

Then, the guidance calculation unit 34 calculates a control amount for performing feedback control (for example, PID control) for stabilizing the vertical takeoff and landing aircraft 1, holding the attitude or altitude, guiding the vertical takeoff and landing aircraft 1 to the landing target point 2, and the like, based on the relative position (X, Y), the relative altitude Δh, the relative speed (ΔVx, ΔVy, ΔVz), and the airframe acceleration. The feedback control is not limited to the PID control, and may be a P control, a PI control, a PD control, or the like. The guidance calculation unit 34 outputs the calculated control amount C (refer to Fig. 6) to the flight control unit 36.

### (Flight Control Unit)

The flight control unit 36 controls each component of the vertical takeoff and landing aircraft 1 to fly the vertical takeoff and landing aircraft 1 in accordance with the control amount calculated by the guidance calculation unit 34. The flight control unit 36 controls a blade pitch angle, the rotation speed, and the like of each rotor blade according to the control amount, and adjusts the airframe speed, the attitude angle, the rate of the attitude angle, and the like of the vertical takeoff and landing aircraft 1. Accordingly, the vertical takeoff and landing aircraft 1 is guided to the landing target point 2. In the present embodiment, the image processing unit 32 and the guidance calculation unit 34 are described as separate functional units from the flight control unit 36. However, the flight control unit 36, the image processing unit 32, and the guidance calculation unit 34 may be integrated into one functional unit. That is, the flight control unit 36 may perform the processing of the image processing unit 32 and the guidance calculation unit 34.

### (Landing Control Method of Vertical Takeoff and Landing Aircraft)

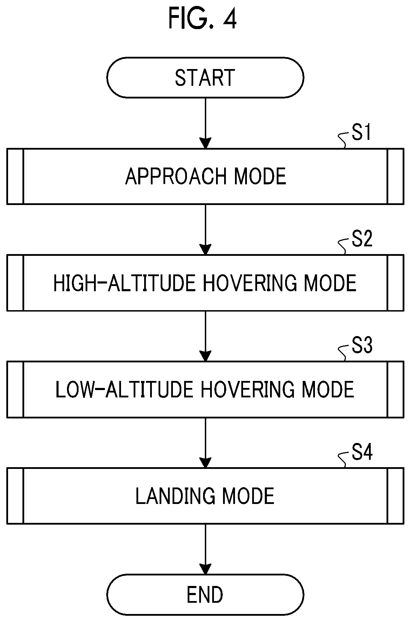

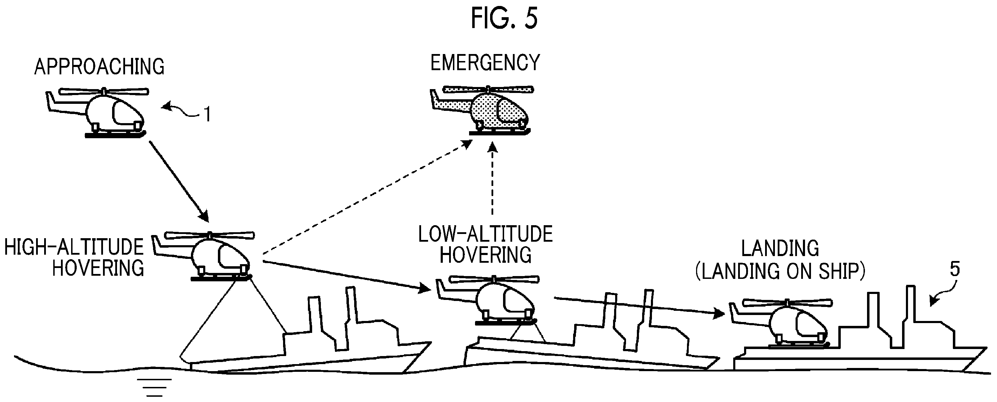

Next, a procedure for guiding the vertical takeoff and landing aircraft 1 to the landing target point 2 and landing the vertical takeoff and landing aircraft 1 at the landing target point 2 by the control unit 30 will be described as a landing control method of the vertical takeoff and landing aircraft according to the present embodiment. Fig. 4 is a flowchart showing an example of a processing procedure of a landing control method for the vertical takeoff and landing aircraft according to the present embodiment. Fig. 5 is an explanatory view showing a landing operation of the vertical takeoff and landing aircraft according to the present embodiment.

First, as shown in Figs. 4 and 5, the vertical takeoff and landing aircraft 1 executes a plurality of control modes in a series of landing operations of landing on the ship 5 from a flight state. Specifically, the vertical takeoff and landing aircraft 1 performs a series of landing operations by sequentially performing step S1 of executing an approach mode, step S2 of executing a high-altitude hovering mode, step S3 of executing a low-altitude hovering mode, and step S4 of executing a landing mode. In addition, the vertical takeoff and landing aircraft 1 is performing a step of executing an emergency mode of interrupting execution of the high-altitude hovering mode and the low-altitude hovering mode to interrupt the landing operation.

As shown in Fig. 5, the approach mode is a mode in which the vertical takeoff and landing aircraft 1 is caused to approach the deck of the ship 5 by an instruction from the ship 5, and the vertical takeoff and landing aircraft 1 hovers on the marker 7 that is the landing target point 2. The high-altitude hovering mode is a mode in which the vertical takeoff and landing aircraft 1 hovers such that the marker 7 on the deck is captured by the camera 10 and the landing target point 2, which is the center of the marker 7, is at the center of the imaging range (angle of view) B of the camera 10. The low-altitude hovering mode is a mode in which the vertical takeoff and landing aircraft 1 descends and hovers at an altitude lower than that in the high-altitude hovering mode. The landing mode is a mode in which the vertical takeoff and landing aircraft 1 lands on the landing target point 2. The emergency mode is a mode in which the vertical takeoff and landing aircraft 1 interrupts the landing operation on the ship 5 and ascends.

### (Vertical Takeoff and Landing Aircraft Horizontal Position Control)

Fig. 6 is a block diagram of an example of horizontal position control causing the vertical takeoff and landing aircraft to track a swaying landing target point.

As shown in Fig. 6, in the horizontal position control of the vertical takeoff and landing aircraft 1, in the low-altitude hovering mode, the guidance calculation unit 34 performs the horizontal position control relating to a target point tracking hovering in which the horizontal position of the vertical takeoff and landing aircraft 1 is caused to track the movement of the landing target point 2 caused by the swaying. For this reason, the guidance calculation unit 34 calculates the control amount C of the vertical takeoff and landing aircraft 1 for executing the target point tracking hovering. In Fig. 6, a component in the X direction, which is a direction of the pitch axis, and a component in the Y direction, which is a direction of the roll axis, are shown together, and the control amount of each component is calculated by the guidance calculation unit 34.

### (Target Point Tracking Hovering with Respect to Relative Position)

In Fig. 6, the horizontal position control related to the target point tracking hovering is executed so that the vertical takeoff and landing aircraft 1 tracks the landing target point 2 that changes due to the swaying. The guidance calculation unit 34 includes an acceleration correction processing unit 41, a smoothing processing unit 43, a Kalman filter 46, a relative speed estimation processing unit 47, a swaying amount estimation processing unit 51, a target information generation processing unit 52, a changeover switch 53, a subtraction circuit unit 54, and a feedback control unit 55. The acceleration correction processing unit 41, the smoothing processing unit 43, the Kalman filter 46, the relative speed estimation processing unit 47, the swaying amount estimation processing unit 51, the target information generation processing unit 52, the changeover switch 53, the subtraction circuit unit 54, and the feedback control unit 55 may be realized by the guidance calculation unit 34, may be realized by a processing unit separate from the guidance calculation unit 34, or may be realized by a combination thereof, and are not particularly limited.

The acceleration correction processing unit 41 outputs the attitude correction acceleration obtained by correcting the acceleration of the vertical takeoff and landing aircraft 1 based on the acceleration of the vertical takeoff and landing aircraft 1 and the attitude of the vertical takeoff and landing aircraft 1. The attitude correction acceleration is obtained by performing a coordinate transformation of the acceleration in the airframe axis coordinate system based on the attitude angle of the vertical takeoff and landing aircraft 1, and converting the acceleration into the acceleration in the inertial space coordinate system. Specifically, the acceleration correction processing unit 41 receives the acceleration of the vertical takeoff and landing aircraft 1 acquired by the navigation system 20 and receives the attitude angle of the vertical takeoff and landing aircraft 1 acquired by the navigation system 20. The input acceleration is acceleration in a longitudinal direction (a front-rear direction in the airframe coordinate system), a lateral direction (a left-right direction in the airframe coordinate system), and a vertical direction (an up-down direction in the airframe coordinate system). In addition, the input attitude angles are attitude angles in the pitch axis, the roll axis, and the yaw axis. When the acceleration of the vertical takeoff and landing aircraft 1 and the attitude angle of the vertical takeoff and landing aircraft 1 are input, the acceleration correction processing unit 41 calculates an attitude correction acceleration obtained by correcting the acceleration of the vertical takeoff and landing aircraft 1 in the longitudinal direction and the lateral direction. The acceleration correction processing unit 41 outputs the calculated attitude correction acceleration to the smoothing processing unit 43, the swaying amount estimation processing unit 51, and the feedback control unit 55.

The Kalman filter 46 performs estimation based on the relative position (X, Y) and outputs the estimated relative position (X, Y) after estimation. Specifically, the relative position (X, Y) calculated by the guidance calculation unit 34 is input to the Kalman filter 46. When the relative position (X, Y) is input, the Kalman filter 46 estimates a change over time in the relative position (X, Y) to calculate the estimated relative position (X, Y). The Kalman filter 46 outputs the calculated estimated relative position (X, Y) to the smoothing processing unit 43.

The smoothing processing unit 43 performs processing for calculating the smoothed relative position, which is an average relative position, even in a case where the landing target point 2 changes due to swaying. The smoothing processing unit 43 outputs the smoothed relative position (X, Y) obtained by smoothing the estimated relative position (X, Y) based on the attitude correction acceleration and the estimated relative position (X, Y). Specifically, the smoothing processing unit 43 receives the attitude correction acceleration output from the acceleration correction processing unit 41 and receives the estimated relative position (X, Y) calculated by the Kalman filter 46. When the attitude correction acceleration and the estimated relative position (X, Y) are input, the smoothing processing unit 43 calculates the smoothed relative position (X, Y). Then, the smoothing processing unit 43 outputs the calculated smoothed relative position (X, Y) to the subtraction circuit unit 54.

The relative speed estimation processing unit 47 outputs the estimated relative speed based on the relative position (X, Y) and the airframe speed of the vertical takeoff and landing aircraft 1. Specifically, the relative speed estimation processing unit 47 receives the relative position (X, Y) calculated by the guidance calculation unit 34 and receives the airframe speed of the vertical takeoff and landing aircraft 1 in the longitudinal direction and the lateral direction acquired by the navigation system 20. The relative speed estimation processing unit 47 estimates the relative speed from the input relative position (X, Y) and the airframe speed, and outputs the estimated relative speed to a subtraction circuit unit 54 to be described later.

The swaying amount estimation processing unit 51 performs processing for estimating the swaying amount of the landing target point 2 that changes due to the swaying. The swaying amount estimation processing unit 51 estimates the swaying amount based on the attitude correction acceleration and the relative position (X, Y). The swaying amount estimation processing unit 51 amplifies an output signal by applying a gain to an input signal. The input signal is the estimated relative position (X, Y), and the output signal is the swaying amount (estimated value).

The target information generation processing unit 52 outputs a target relative position as a target between the vertical takeoff and landing aircraft 1 and the landing target point 2 and a target relative speed as a target between the vertical takeoff and landing aircraft 1 and the landing target point 2, based on the swaying amount.

The subtraction circuit unit 54 calculates a positional difference between the smoothed relative position (X, Y) input from the smoothing processing unit 43 and the target relative position input from the target information generation processing unit 52. Then, the subtraction circuit unit 54 outputs the calculated positional difference to the feedback control unit 55. In addition, the subtraction circuit unit 54 calculates a speed difference between the estimated relative speed input from the relative speed estimation processing unit 47 and the target relative speed input from the target information generation processing unit 52. Then, the subtraction circuit unit 54 outputs the calculated speed difference to the feedback control unit 55.

The feedback control unit 55 calculates the control amount C based on the positional difference and the speed difference input from the subtraction circuit unit 54 and the attitude correction acceleration input from the acceleration correction processing unit 41. Then, the feedback control unit 55 outputs the calculated control amount C to the flight control unit 36.

The flight control unit 36 executes flight control based on the control amount C. As an example of the flight control by the flight control unit 36, in a case where the vertical takeoff and landing aircraft 1 is a helicopter, the flight control unit 36 performs flight control for tilting the main rotor of the helicopter in the longitudinal direction and the lateral direction to execute target point tracking hovering.

The changeover switch 53 switches presence or absence of execution of the target point tracking hovering. Specifically, the changeover switch 53 switches the presence or absence of input of the target relative position and the target relative speed to the subtraction circuit unit 54. The changeover switch 53 allows the input of the target relative position and the target relative speed to the subtraction circuit unit 54, so that the target point tracking hovering can be executed. On the other hand, the changeover switch 53 blocks the input of the target relative position and the target relative speed to the subtraction circuit unit 54, so that the execution of the target point tracking hovering is disabled and the execution of the space stable hovering is enabled. The space stable hovering is flight control based on the smoothed relative position, and is position control for the space stable hovering in which the vertical takeoff and landing aircraft 1 is held at a target relative position in space with respect to the landing target point 2. When the input of the target relative position and the target relative speed to the subtraction circuit unit 54 is blocked by the changeover switch 53, the smoothed relative position (X, Y) is input to the flight control unit 36, and thus the flight control unit 36 executes the flight control of the space stable hovering.

Here, the switching control by the changeover switch 53 may be performed using, for example, the swaying amount or the altitude. In the switching control, in a case where the swaying amount is used, the switching may be performed such that the flight control of the space stable hovering is executed when the swaying amount is equal to or greater than a preset threshold value and the flight control of the target point tracking hovering is executed when the swaying amount is smaller than the threshold value. In addition, in the switching control, in the case where the altitude is used, the switching may be performed such that the flight control of the space stable hovering is executed when the altitude is equal to or higher than a preset threshold value and the flight control of the target point tracking hovering is executed when the altitude is lower than the threshold value.

### (Vertical Position Control of Vertical Takeoff and Landing Aircraft)

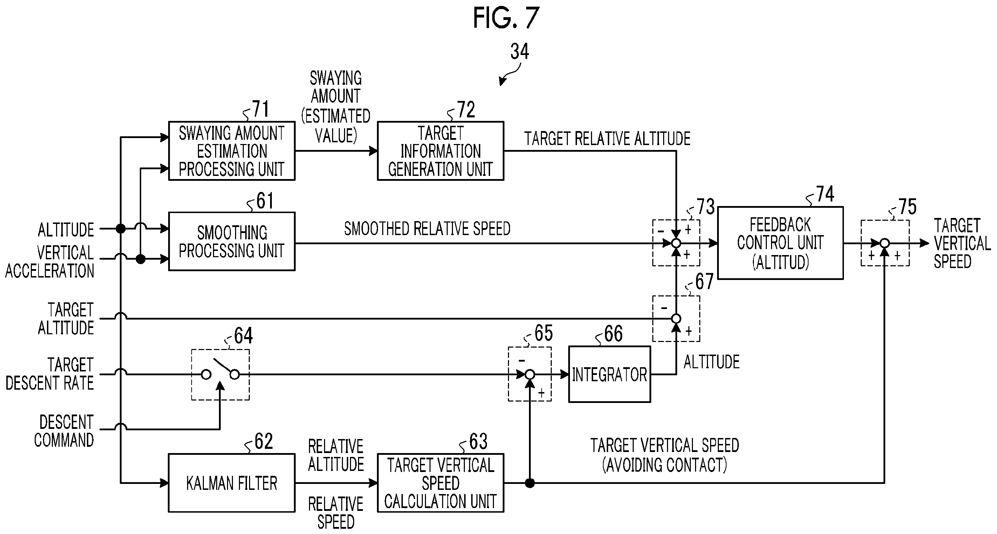

Fig. 7 is a block diagram of an example of vertical position control causing the vertical takeoff and landing aircraft to track the swaying landing target point.

As shown in Fig. 7, in the vertical position control of the vertical takeoff and landing aircraft 1, in the low-altitude hovering mode, the guidance calculation unit 34 performs the vertical position control relating to a target point tracking hovering in which the vertical position of the vertical takeoff and landing aircraft 1 is caused to track the movement of the landing target point 2 caused by the swaying. For this reason, the guidance calculation unit 34 calculates the control amount C of the vertical takeoff and landing aircraft 1 for executing the target point tracking hovering.

### (Target Point Tracking Hovering with Respect to Relative Position)

In Fig. 7, the vertical position control related to the target point tracking hovering is executed so that the vertical takeoff and landing aircraft 1 tracks the landing target point 2 that changes due to the swaying. The guidance calculation unit 34 includes a smoothing processing unit 61, a Kalman filter 62, a target vertical speed calculation unit (contact determination unit) 63, a changeover switch (switching unit) 64, a subtraction circuit unit 65, an integrator 66, an addition circuit unit 67, a swaying amount estimation processing unit 71, a target information generation unit 72, a subtraction circuit unit (correction unit) 73, a feedback control unit 74, and an addition circuit unit 75. The smoothing processing unit 61, the Kalman filter 62, the target vertical speed calculation unit 63, the changeover switch 64, the subtraction circuit unit 65, the integrator 66, the addition circuit unit 67, the swaying amount estimation processing unit 71, the target information generation unit 72, the subtraction circuit unit 73, the feedback control unit 74, and the addition circuit unit 75 may be realized by the guidance calculation unit 34, may be realized by a processing unit separate from the guidance calculation unit 34, or may be realized by a combination thereof, and are not particularly limited.

The smoothing processing unit 61 performs processing for calculating the smoothed relative altitude, which is the average relative position, even in a case where the landing target point 2 changes due to swaying. The smoothing processing unit 61 outputs a smoothed relative altitude obtained by smoothing the altitude, based on the altitude and the vertical acceleration. Specifically, the altitude (or relative altitude) measured by the altitude sensor 25 and the attitude correction acceleration processed by the acceleration correction processing unit 41, that is, the vertical acceleration obtained by correcting the acceleration of the vertical takeoff and landing aircraft 1 acquired by the navigation system 20 with the attitude angle, are input to the smoothing processing unit 61. When the altitude and the vertical acceleration are input, the smoothing processing unit 61 calculates the smoothed relative altitude. Then, the smoothing processing unit 61 outputs the calculated smoothed relative altitude to the subtraction circuit unit 73.

The Kalman filter 62 calculates a relative altitude and a relative speed from the altitude. The relative altitude may be the relative altitude Δh measured by the altitude sensor 25.

The target vertical speed calculation unit (contact determination unit) 63 determines whether or not there is contact between the vertical takeoff and landing aircraft 1 and the landing target point 2, based on the relative speed and the relative altitude. That is, the target vertical speed calculation unit 63 determines whether or not an ascent for avoiding contact with the landing target point 2 is required for the vertical takeoff and landing aircraft 1. The target vertical speed calculation unit 63 sets a limit value according to the relative altitude and the relative speed in order to avoid contact between the vertical takeoff and landing aircraft 1 and the landing target point 2. The target vertical speed calculation unit 63 sets a limit value of the relative altitude with respect to the relative speed in order to avoid contact between the vertical takeoff and landing aircraft 1 and the landing target point 2 to partition an avoidance region and an altitude holding region, which will be described later, within a control space where relative speed and relative altitude serve as axes.

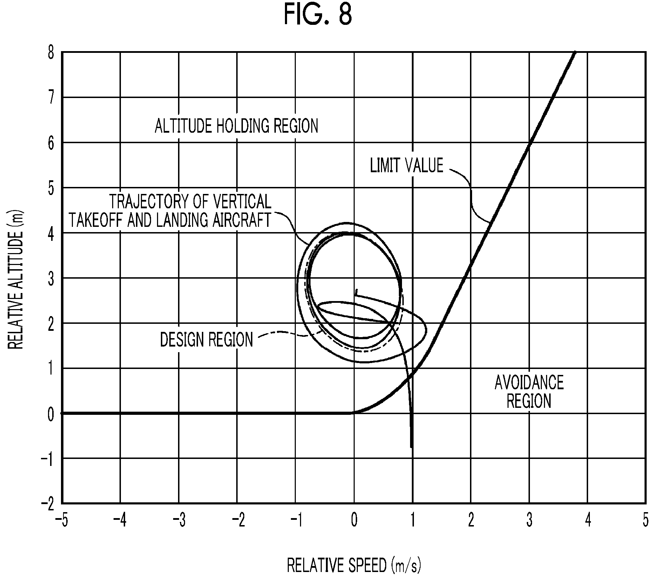

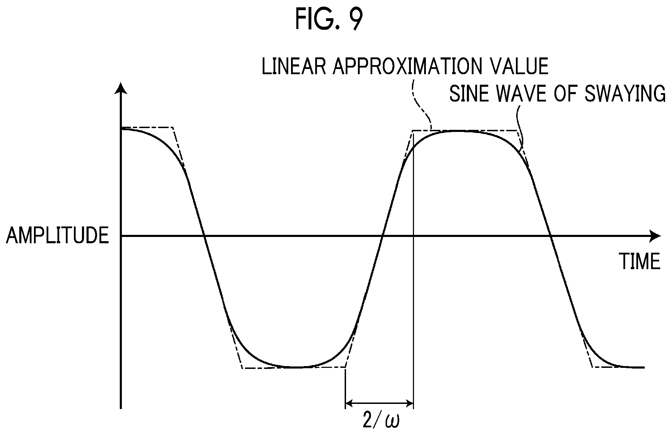

Fig. 8 is an explanatory diagram for describing a contact determination between the vertical takeoff and landing aircraft and the landing target point, and Fig. 9 is an explanatory diagram for describing a method for setting a collision avoidance region.

As shown in Fig. 8, a limit value for avoiding contact between the vertical takeoff and landing aircraft 1 and the landing target point 2 is set in a relationship between the relative speed and the relative altitude. The limit value is set such that the relative altitude is constant on a side where the relative speed decreases, and the relative altitude gradually increases on a side where the relative speed increases, with respect to the relative speed of 0. The avoidance region and the altitude holding region in the relationship between the relative speed and the relative altitude are partitioned by the limit value. Here, a region equal to or less than the limit value of the relative altitude with respect to the relative speed is an avoidance region, and a region above the limit value is an altitude holding region. When the relationship between the relative speed and the relative altitude enters the avoidance region, the target vertical speed calculation unit 63 determines that the ascent for avoiding the contact between the vertical takeoff and landing aircraft 1 and the landing target point 2 is required.

As shown in Figs. 8 and 9, when the ship 5 (landing target point 2) sways, the swaying is modeled on the assumption of a predetermined sine wave. Then, a sine wave of the swaying is linearly approximated to obtain approximate straight lines. As the condition under which the possibility of contact between the vertical takeoff and landing aircraft 1 and the landing target point 2, which sways according to the sine wave Asin(ωt + φ), is highest, with reference to the approximate straight lines, it is assumed that the maximum slope (change rate) Aω persists for a duration of 2/ω, during which fluctuation corresponding to both amplitudes occurs. Then, when the maximum value of the slope Aω of the approximate straight lines continues for a duration of 2/ω, a limit value that is a relationship between the relative speed and the relative altitude at which the vertical takeoff and landing aircraft 1 and the landing target point 2 do not come into contact with each other is set. When the relative speed increases, there is a high possibility of contact in a case where there is not a sufficient distance (altitude difference) between the vertical takeoff and landing aircraft 1 and the landing target point 2. Therefore, the avoidance region may be expanded to a region where the relative altitude increases as the relative speed increases. However, the method for setting the avoidance region is not limited to the method of performing the sine wave approximation of the swaying and the linear approximation of the sine wave.

As shown in Fig. 7, when the target vertical speed calculation unit 63 determines that the vertical takeoff and landing aircraft 1 and the landing target point 2 do not come into contact with each other, the target vertical speed calculation unit 63 maintains an altitude holding state. On the other hand, when the target vertical speed calculation unit 63 determines that the ascent for avoiding the contact between the vertical takeoff and landing aircraft 1 and the landing target point 2 is required, the calculated target vertical speed (ascent command) is output to the addition circuit unit 75. The target vertical speed output by the target vertical speed calculation unit 63 is a specific speed for avoiding contact between the vertical takeoff and landing aircraft 1 and the landing target point 2. The target vertical speed may be a preset speed, or may be a speed that fluctuates according to the relative speed or the relative altitude. Thereafter, when the target vertical speed calculation unit 63 determines that the vertical takeoff and landing aircraft 1 is in the altitude holding region, that is, the vertical takeoff and landing aircraft 1 ascends and does not come into contact with the landing target point 2, the target vertical speed calculation unit 63 stops outputting the ascent command.'

The changeover switch 64 receives the target descent rate, and receives a descent recommendation (descent command) for the vertical takeoff and landing aircraft 1. The target vertical speed calculation unit 63 determines whether or not the ascent for avoiding contact between the vertical takeoff and landing aircraft 1 and the landing target point 2 is required, and determines whether or not the swaying of the ship 5 has subsided after the vertical takeoff and landing aircraft 1 ascends from the low-altitude hovering. Here, when it is determined that the swaying of the ship 5 has subsided, the descent command for the vertical takeoff and landing aircraft 1 is input to the changeover switch 64. When the descent command for the vertical takeoff and landing aircraft 1 is input, the changeover switch 64 switches from the disconnection (off) state to the connection (on) state and outputs the input target descent rate to the subtraction circuit unit 65. When it is determined that the vertical takeoff and landing aircraft 1 and the landing target point 2 do not come into contact with each other, the altitude holding state is maintained.

The subtraction circuit unit 65 corrects the target ascent rate based on the target descent rate input from the changeover switch 64 and an ascent rate input from the target vertical speed calculation unit 63. That is, the subtraction circuit unit 65 corrects the ascent rate by subtracting a descent rate in order to add the descent rate that takes a positive value at the time of the descent and the ascent rate that takes a positive value at the time of the ascent. The subtraction circuit unit 65 outputs the calculated target ascent rate to the integrator 66. The integrator 66 calculates the altitude difference by performing integration processing on the input target ascent rate. The integrator 66 outputs the calculated altitude difference to the addition circuit unit 67. The addition circuit unit 67 adds the altitude difference input from the integrator 66 to the target altitude to correct the relative altitude. The addition circuit unit 67 outputs the corrected target altitude to the subtraction circuit unit 73.

The swaying amount estimation processing unit 71 performs processing for estimating the swaying amount of the landing target point 2, which changes due to the swaying of the ship 5. The swaying amount estimation processing unit 71 estimates the swaying amount based on the relative altitude and the vertical acceleration. The swaying amount estimation processing unit 71 amplifies the output signal by applying a gain to the input signal. The input signal is the relative altitude, and the output signal is the swaying amount (estimated value). The target information generation unit 72 outputs the target relative altitude as a target between the vertical takeoff and landing aircraft 1 and the landing target point 2 based on the swaying amount.

That is, the smoothing processing unit 61 calculates the smoothed relative altitude based on the relative altitude and the vertical acceleration. At this time, the vertical takeoff and landing aircraft 1 flies along a predetermined trajectory as shown in Fig. 8. When the vertical takeoff and landing aircraft 1 is in the low-altitude hovering mode, it is desired to reduce fluctuations in a position of the vertical takeoff and landing aircraft 1 due to the relative speed and the relative altitude in the vertical takeoff and landing aircraft 1. When the fluctuation in the position of the vertical takeoff and landing aircraft 1 is small, the relationship between the relative speed and the relative altitude in the vertical takeoff and landing aircraft 1 does not exceed the limit value and does not transition to the avoidance region. Therefore, a design region of the relationship between the relative speed and the relative altitude at which the vertical takeoff and landing aircraft 1 does not come into contact with the ship 5 is set. In the low-altitude hovering mode, the design region is a region where the vertical takeoff and landing aircraft 1 is maintained at a predetermined relative altitude and is maintained at the relative altitude that can transition to the landing mode. The target information generation unit 72 calculates a target relative altitude in which the relationship between the relative speed and the relative altitude is maintained in the design region.

As shown in Fig. 7, the subtraction circuit unit 73 calculates an altitude difference, which is a difference between the smoothed relative altitude input from the smoothing processing unit 61 and the target altitude input from the addition circuit unit 67, and calculates the target relative altitude by adding the altitude difference to the target relative altitude input from the target information generation unit 72. Then, the subtraction circuit unit 73 outputs the calculated target relative altitude to the feedback control unit 74. The feedback control unit 74 calculates the control amount C based on the target relative altitude input from the subtraction circuit unit 73. The feedback control unit 74 outputs the calculated control amount C to the addition circuit unit 75. The addition circuit unit 75 outputs the control amount C input from the feedback control unit 74 and the target vertical speed input from the target vertical speed calculation unit 63 to the flight control unit 36. The flight control unit 36 causes the vertical takeoff and landing aircraft 1 to ascend based on the control amount C and the target vertical speed.

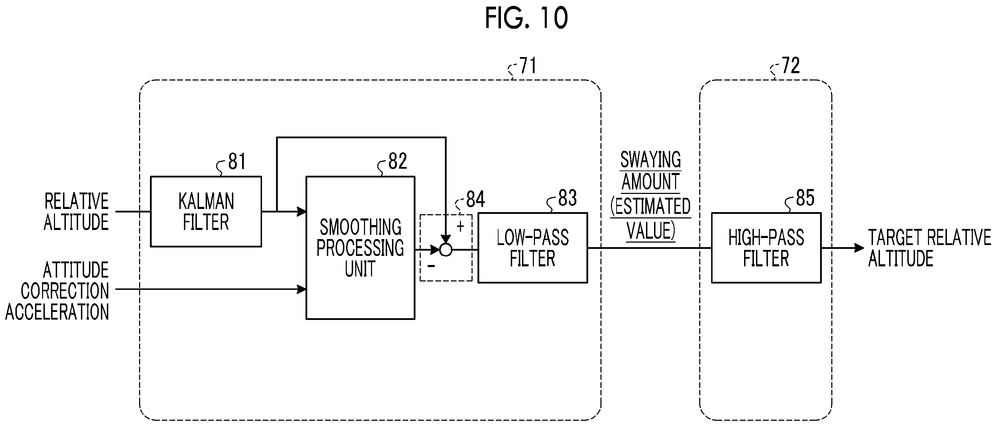

Fig. 10 is a block diagram showing an example of swaying amount estimation processing and target information generation processing.

The swaying amount estimation processing unit 71 includes a Kalman filter 81, a smoothing processing unit 82, a low-pass filter 83, and a subtraction circuit unit 84.

The Kalman filter 81 performs estimation based on the relative altitude and outputs the estimated relative altitude after the estimation. Specifically, when the relative altitude is input, the Kalman filter 81 estimates time change in the relative altitude to calculate the estimated relative altitude. The Kalman filter 81 outputs the calculated estimated relative altitude to the smoothing processing unit 82 and the subtraction circuit unit 84.

The smoothing processing unit 82 performs processing for calculating the smoothed relative altitude, which is the average relative altitude, even in a case where the landing target point 2 changes due to swaying. The smoothing processing unit 82 outputs the smoothed relative altitude obtained by smoothing the estimated relative altitude based on the attitude correction acceleration and the estimated relative altitude. Then, the smoothing processing unit 82 outputs the calculated smoothed relative altitude to the subtraction circuit unit 84.

The subtraction circuit unit 84 outputs the swaying amount based on the estimated relative altitude and the smoothed relative altitude. Specifically, the subtraction circuit unit 84 takes a difference between the estimated relative altitude and the smoothed relative altitude, and calculates the difference as the swaying amount. Then, the subtraction circuit unit 84 outputs the calculated swaying amount to the low-pass filter 83. The low-pass filter 83 is a filter that attenuates a frequency equal to or higher than a predetermined cutoff frequency with respect to the swaying amount input from the subtraction circuit unit 84. The low-pass filter 83 removes a high-frequency component of the swaying amount and outputs a low-frequency component provided in the swaying amount to the target information generation unit 72.

The target information generation unit 72 includes a high-pass filter 85. The high-pass filter 85 is a filter that converts the swaying amount into a target relative altitude and outputs the converted target relative altitude. The target relative altitude is derived by multiplying the swaying amount by the high-pass filter 85. The high-pass filter 85 outputs the calculated target relative altitude to the subtraction circuit unit 73.

### (Effect of Vertical Position Control)

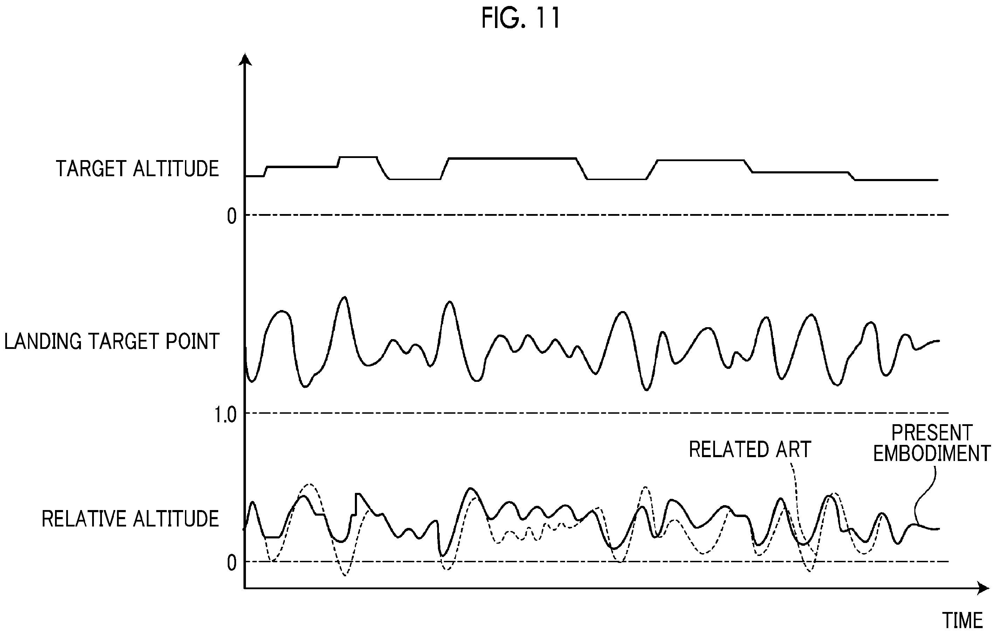

Fig. 11 is a graph representing a relationship between a target altitude, a landing target point, and a relative altitude at the time of landing of the vertical takeoff and landing aircraft. The graph of Fig. 10 is a simulation result.

As shown in Fig. 11, in a vertical position control of the vertical takeoff and landing aircraft 1 by the position control system 100 of the present embodiment, when the target altitude is set and the ship 5 (landing target point) 2 is swaying, the solid line representing the relative altitude in Fig. 10 represents the vertical position control of the present embodiment, and the broken line representing the relative altitude represents the vertical position control of the related art. In the vertical position control in the related art, the relative altitude is 0 at a plurality of time points, and the vertical takeoff and landing aircraft 1 and the ship 5 come into contact with each other. On the other hand, in the vertical position control of the present embodiment, the relative altitude is not 0, and the contact between the vertical takeoff and landing aircraft 1 and the ship 5 is avoided.

### [Effect and Action of Present Embodiment]

A position control system for a vertical takeoff and landing aircraft according to a first aspect includes a relative speed acquisition unit that acquires a relative speed based on a relative position between a vertical takeoff and landing aircraft 1 and a landing target point 2; a relative altitude acquisition unit that acquires a relative altitude based on the relative position between the vertical takeoff and landing aircraft 1 and the landing target point 2; and a target vertical speed calculation unit (contact determination unit) 63 that determines whether contact occurs between the vertical takeoff and landing aircraft 1 and the landing target point 2 based on the relative speed and the relative altitude.

According to the position control system for a vertical takeoff and landing aircraft of the first aspect, since the need for ascent to avoid contact between the vertical takeoff and landing aircraft 1 and the landing target point 2 is determined based on the relative speed and the relative altitude, even when the relative altitude between the vertical takeoff and landing aircraft 1 and the landing target point 2 fluctuates due to the swaying of the ship 5, it is possible to suitably track the landing target point 2 while avoiding contact between the vertical takeoff and landing aircraft 1 and the landing target point 2.

A position control system for a vertical takeoff and landing aircraft according to a second aspect is the position control system for a vertical takeoff and landing aircraft according to the first aspect, in which the target vertical speed calculation unit 63 determines whether or not an ascent for avoiding contact with the landing target point 2 is required for the vertical takeoff and landing aircraft 1. In this manner, it is possible to easily process whether or not the vertical takeoff and landing aircraft 1 can ascend due to the possibility of contact between the vertical takeoff and landing aircraft 1 and the landing target point 2.

A position control system for a vertical takeoff and landing aircraft according to a third aspect is the position control system for a vertical takeoff and landing aircraft according to the first aspect or the second aspect, in which the target vertical speed calculation unit 63 sets a limit value for the relative altitude with respect to the relative speed, the limit value being set as a limit value that increases as the relative speed increases, and determines that an ascent for avoiding contact between the vertical takeoff and landing aircraft 1 and the landing target point 2 is required when the relative altitude with respect to the relative speed falls below the limit value. In this manner, it is possible to easily process the contact determination between the vertical takeoff and landing aircraft 1 and the landing target point 2.

A position control system for a vertical takeoff and landing aircraft according to a fourth aspect is the position control system for a vertical takeoff and landing aircraft according to any one of the first aspect to third aspect, in which the target vertical speed calculation unit 63 outputs a signal to cause the vertical takeoff and landing aircraft 1 to ascend at a specific speed when it is determined that an ascent for avoiding contact between the vertical takeoff and landing aircraft 1 and the landing target point 2 is required. In this manner, contact between the vertical takeoff and landing aircraft 1 and the landing target point 2 can be prevented in advance.

A position control system for a vertical takeoff and landing aircraft according to a fifth aspect is the position control system for a vertical takeoff and landing aircraft according to the fourth aspect, in which the target vertical speed calculation unit 63 outputs a signal to lower the vertical takeoff and landing aircraft 1 to an altitude prior to the ascent when a swaying of the landing target point 2 subsides after it is determined that the ascent for avoiding the contact between the vertical takeoff and landing aircraft 1 and the landing target point 2 is required. In this manner, the vertical takeoff and landing aircraft 1 can return to the low-altitude hovering mode at an early stage, and can prepare for the landing on the landing target point 2.

A position control system for a vertical takeoff and landing aircraft according to a sixth aspect is the position control system for a vertical takeoff and landing aircraft according to any one of the first aspect to fifth aspect, the system further includes a swaying amount estimation processing unit 71 that estimates a swaying amount of a landing target point 2 based on the relative altitude and a vertical acceleration of the vertical takeoff and landing aircraft; a target information generation unit 72 that calculates a target relative altitude as a target between the vertical takeoff and landing aircraft 1 and the landing target point 2 based on the swaying amount; and a subtraction circuit unit (correction unit) 73 that corrects a preset target relative altitude using a calculated value of the target information generation unit 72. In this manner, even when the landing target point 2 sways, the vertical takeoff and landing aircraft 1 can be suitably caused to track the swaying movement of the landing target point 2.

A position control system for a vertical takeoff and landing aircraft according to a seventh aspect includes a relative speed acquisition unit that acquires a relative speed based on a relative position between a vertical takeoff and landing aircraft 1 and a landing target point 2; a relative altitude acquisition unit that acquires a relative altitude based on the relative position between the vertical takeoff and landing aircraft 1 and the landing target point 2; a swaying amount estimation processing unit 71 that estimates a swaying amount of the landing target point 2 based on the relative altitude and a vertical acceleration; and a target information generation unit 72 that calculates a target relative altitude as a target between the vertical takeoff and landing aircraft 1 and the landing target point 2 based on the swaying amount. In this manner, even when the landing target point 2 sways, the vertical takeoff and landing aircraft 1 can be suitably caused to track the swaying movement of the landing target point 2. Since the vertical takeoff and landing aircraft 1 can be caused to track the landing target point 2, the vertical takeoff and landing aircraft 1 can be landed on the ship 5 at any time when the vertical takeoff and landing aircraft 1 is stable.

The vertical takeoff and landing aircraft according to an eighth aspect includes the position control system 100 for the vertical takeoff and landing aircraft 1. Accordingly, even when the relative altitude between the vertical takeoff and landing aircraft 1 and the landing target point 2 fluctuates due to the swaying of the ship 5 or the like, it is possible to suitably track the landing target point 2 while avoiding contact between the vertical takeoff and landing aircraft 1 and the landing target point 2.

A position control method for a vertical takeoff and landing aircraft according to a ninth aspect includes a step of acquiring a relative speed based on a relative position between a vertical takeoff and landing aircraft 1 and a landing target point 2; a step of acquiring a relative altitude based on the relative position between the vertical takeoff and landing aircraft 1 and the landing target point 2; and a step of determining whether contact occurs between the vertical takeoff and landing aircraft 1 and the landing target point 2 based on the relative speed and the relative altitude. Accordingly, since the contact between the vertical takeoff and landing aircraft 1 and the landing target point 2 is determined based on the relative speed and the relative altitude, even when the relative altitude between the vertical takeoff and landing aircraft 1 and the landing target point 2 fluctuates due to the swaying of the ship 5, it is possible to suitably track the landing target point 2 while avoiding contact between the vertical takeoff and landing aircraft 1 and the landing target point 2.

### Reference Signs List

1: vertical takeoff and landing aircraft
2: landing target point
5: ship
7: marker
10: camera
20: navigation system
30: control unit
32: image processing unit
34: guidance calculation unit
36: flight control unit
41: acceleration correction processing unit
43: smoothing processing unit
46: Kalman filter
47: relative speed estimation processing unit
51: swaying amount estimation processing unit
52: target information generation processing unit
53: changeover switch
54: subtraction circuit unit
61: smoothing processing unit
62: Kalman filter (relative speed acquisition unit, relative altitude acquisition unit)
63: target vertical speed calculation unit (contact determination unit)
64: changeover switch (switching unit)
65: subtraction circuit unit
66: integrator
67: addition circuit unit
71: swaying amount estimation processing unit
72: target information generation unit
73: subtraction circuit unit
74: feedback control unit
75: addition circuit unit (correction unit)
81: Kalman filter
82: smoothing processing unit
83: low-pass filter
84: subtraction circuit unit
85: high-pass filter
100: position control system

## Claims

1. A position control system for a vertical takeoff and landing aircraft, the system comprising:
a relative speed acquisition unit that acquires a relative speed based on a relative position between a vertical takeoff and landing aircraft and a landing target point;
a relative altitude acquisition unit that acquires a relative altitude based on the relative position between the vertical takeoff and landing aircraft and the landing target point; and
a contact determination unit that determines whether contact occurs between t he vertical takeoff and landing aircraft and the landing target point based on the relativ e speed and the relative altitude.

2. The position control system for a vertical takeoff and landing aircraft according to claim 1,
wherein the contact determination unit determines whether or not an ascent for avoiding contact with the landing target point is required for the vertical takeoff and landing aircraft.

3. The position control system for a vertical takeoff and landing aircraft according to claim 1,
wherein the contact determination unit sets a limit value for the relative altitude with respect to the relative speed, the limit value being set as a limit value that increases as the relative speed increases, and determines that an ascent for avoiding contact between the vertical takeoff and landing aircraft and the landing target point is required when the relative altitude with respect to the relative speed falls below the limit value.

4. The position control system for a vertical takeoff and landing aircraft according to claim 1 or 2,
wherein the contact determination unit outputs a signal to cause the vertical takeoff and landing aircraft to ascend at a specific speed when it is determined that an ascent for avoiding contact between the vertical takeoff and landing aircraft and the landing target point is required.

5. The position control system for a vertical takeoff and landing aircraft according to claim 4,
wherein the contact determination unit outputs a signal to lower the vertical takeoff and landing aircraft to an altitude prior to the ascent when a swaying of the landing target point subsides after it is determined that the ascent for avoiding the contact between the vertical takeoff and landing aircraft and the landing target point is required.

6. The position control system for a vertical takeoff and landing aircraft according to claim 1, further comprising:
a swaying amount estimation processing unit that estimates a swaying amount of a landing target point based on the relative altitude and a vertical acceleration of the vertical takeoff and landing aircraft;
a target information generation unit that calculates a target relative altitude as a target between the vertical takeoff and landing aircraft and the landing target point based on the swaying amount; and
a correction unit that corrects a preset target relative altitude using a calculated value of the target information generation unit.

7. A position control system for a vertical takeoff and landing aircraft, the system comprising:
a relative speed acquisition unit that acquires a relative speed based on a relative position between a vertical takeoff and landing aircraft and a landing target point;
a relative altitude acquisition unit that acquires a relative altitude based on the relative position between the vertical takeoff and landing aircraft and the landing target point;
a swaying amount estimation processing unit that estimates a swaying amount of the landing target point based on the relative altitude and a vertical acceleration of the vertical takeoff and landing aircraft; and
a target information generation unit that calculates a target relative altitude as a target between the vertical takeoff and landing aircraft and the landing target point based on the swaying amount.

8. A vertical takeoff and landing aircraft comprising:
the position control system for a vertical takeoff and landing aircraft according to claim 1.

9. A position control method for a vertical takeoff and landing aircraft, the method comprising:
a step of acquiring a relative speed based on a relative position between a vertical takeoff and landing aircraft and a landing target point;
a step of acquiring a relative altitude based on the relative position between the vertical takeoff and landing aircraft and the landing target point; and
a step of determining whether contact occurs between the vertical takeoff and landing aircraft and the landing target point based on the relative speed and the relative altitude.
